# EUROPEAN PATENT APPLICATION

(11) **EP 4 811 603 A1**
(43) Date of publication of application: **23.09.2026**
(21) Application number: 26159749.6
(22) Date of filing: 20.02.2026
(51) Int. Cl.: H02J 9/06, H02M 5/458, H02J 1/08

(54) **UPS POWER TOPOLOGY**

(30) Priority: 18.03.2025 US 202519082722
(71) Applicant: Schneider Electric IT Corporation, Foxboro, MA 02035 (US)
(72) Inventor: MOURIDSEN, Jonas Sonsby, 5200 ODENSE V (DK)
(74) Representative: Lavoix

(57) **Abstract**

Aspects of this disclosure relate to a power system having an input (302) configured to receive power from a power source; an output (336) configured to provide power to a load; a first bus (338); a second bus (340); a neutral node (346); a first set of one or more switching devices (308, 310) coupled to the first bus (338) and configured to control routing of current; a second set of one or more switching devices (318, 320) coupled to the second bus (340) and configured to control the routing of current; and a plurality of switching devices (312, 314, 316, 322, 324, 326) coupled between the neutral node (346) and at least one of the first bus (338) or the second bus (340).

## Description

### BACKGROUND

### 1. Field of the Disclosure

At least one example in accordance with the present disclosure relates generally to power systems for use with uninterruptible power systems.

### 2. Discussion of Related Art

Power devices, such as uninterruptible power supplies (UPSs), may be used to provide regulated, uninterrupted power for sensitive and/or critical loads, such as computer systems and other data-processing systems. Existing UPSs include online UPSs, offline UPSs, line-interactive UPSs, as well as others. UPSs may provide output power to a load. The output power may be derived from a primary source of power, such as a utility-mains source, and/or derived from a back-up source of power, such as an energy-storage device.

### SUMMARY

According to at least one aspect of the present disclosure, a power system is presented, comprising: an input configured to receive power from a power source; an output configured to provide power to a load; a first bus coupled between the input and the output; a second bus coupled between the input and the output; a neutral node; a first set of one or more switching devices coupled to the first bus and configured to control routing of current; a second set of one or more switching devices coupled to the second bus and configured to control the routing of current; and a plurality of switching devices coupled between the neutral node and at least one of the first bus or the second bus, the plurality of switching devices including at least a first switching device and a second switching device, the first switching device configured to be coupled in series with the second switching device between the neutral node and at least one of the first bus or the second bus.

In some examples, the first set of one or more switching devices includes a third switching device and a fourth switching device, the third switching device including a third switch coupled to the input and a third diode coupled to the input, the third switch being coupled in parallel with the third diode, and an anode of the third diode being coupled to the input, and the fourth switching device including a fourth switch coupled to the output and a fourth diode coupled to the output, the fourth switch being coupled in parallel with the fourth diode, and an anode of the fourth diode being coupled to the output. In some examples, the second set of one or more switching devices include a third switching device and a fourth switching device, the third switching device including a third switch coupled to the input and a third diode coupled to the input, the third switch being coupled in parallel with the third diode, a cathode of the third diode being coupled to the input, the fourth switching device including a fourth switch coupled to the output and a fourth diode coupled to the output, the fourth switch being coupled in parallel with the fourth diode, a cathode of the fourth diode being coupled to the output. In some examples, the first switching device and second switching device are coupled between the neutral node and the first bus, and the plurality of switching devices include a third switching device and a fourth switching device, the third switching device and fourth switching device configured to be coupled in series between the neutral node and the second bus. In some examples, the first switching device includes a first switch and a first diode, and the second switching device includes a second switch and a second diode, the first switching device coupled between the first bus and the second switching device, and the second switching device coupled between the first switching device and the neutral node. In some examples, the system further comprises a third switching device coupled between the first bus and a DC bus, the third switching device including a third switch and a third diode. In some examples, the third switching device is coupled to at least one of the first switching device or the second switching device. In some examples, the system further comprises a third switching device coupled between the second bus and a DC bus, the third switching device including a third switch and a third diode. In some examples, the third switching device is coupled to at least one of the first switching device or the second switching device. In some examples, the system further comprises at least one controller, the at least one controller configured to control at least one of the first switching device or the second switching device to be in an open state during a positive cycle of input power or output power. In some examples, the system further comprises at least one controller, the at least one controller configured to control at least one of the first switching device or the second switching device to be in an open state during a negative cycle of input power or output power. In some examples, at least one of the first switching device or the second switching device is rated for a higher voltage than at least one other switch of the plurality of switching devices.

According to at least one aspect of the present disclosure, a non-transitory computer-readable medium containing thereon instructions for instructing at least one processor to control a power system is presented, the instructions instructing the at least one processor to: control a first set of one or more switching devices coupled to a first bus to be in a closed state during a positive cycle and a negative cycle of input power or output power; control a second set of one or more switching devices coupled to a second bus to be in a closed state during the positive cycle and the negative cycle; control a first switching device of a plurality of switching devices to be in an open state during the positive cycle, the plurality of switching devices coupled between the first bus and the second bus; and control a second switching device of the plurality of switching devices to be in an open state during the negative cycle.

In some examples, the instructions further instruct the at least one processor to: monitor a current at an output; and responsive to detecting the current changing control at least one switching device of the plurality of switching devices to be in a closed state during either a positive cycle or a negative cycle. In some examples, controlling at least one switching device to be in a closed state causes at least one of the first bus and the second bus to be selectively coupled to one or more DC busses, the one or more DC busses configured to provide DC voltages. In some examples, the instructions further instruct the at least one processor to selectively open and close at least one switching device of the plurality of switching devices according to a duty cycle.

According to at least one aspect of the disclosure, a method for controlling a power system is presented, comprising: controlling a first set of one or more switching devices coupled to a first bus to be in a closed state during a positive cycle and a negative cycle of input power or output power; controlling a second set of one or more switching devices coupled to a second bus to be in a closed state during the positive cycle and the negative cycle; controlling a first switching device of a plurality of switching devices to be in an open state during the positive cycle, the plurality of switching devices coupled between the first bus and the second bus; and controlling a second switching device of the plurality of switching devices to be in an open state during the negative cycle.

In some examples, the method further comprises monitoring a voltage at an output; responsive to detecting the voltage changing by a threshold amount, controlling at least one switching device of the plurality of switching devices to be in a closed state during either a positive cycle or a negative cycle. In some examples, controlling at least one switching device to be in a closed state causes at least one of the first bus and the second bus to be selectively coupled to one or more DC busses, the one or more DC busses configured to provide DC voltages. In some examples, the method further comprises selectively opening and closing at least one of the plurality of switching devices according to a predetermined duty cycle.

### BRIEF DESCRIPTION OF THE DRAWINGS

Various aspects of at least one embodiment are discussed below with reference to the accompanying figures, which are not intended to be drawn to scale. The figures are included to provide an illustration and a further understanding of the various aspects and embodiments, and are incorporated in and constitute a part of this specification, but are not intended as a definition of the limits of any particular embodiment. The drawings, together with the remainder of the specification, serve to explain principles and operations of the described and claimed aspects and embodiments. In the figures, each identical or nearly identical component that is illustrated in various figures is represented by a like numeral. For purposes of clarity, not every component may be labeled in every figure. In the figures:
FIG. 1 illustrates a block diagram of an uninterruptible power supply according to an example;
FIG. 2 illustrates a block diagram of a power converter topology according to an example;
FIG. 3 illustrates a circuit diagram of a power converter topology according to an example;
FIG. 4 illustrates a circuit diagram of a power converter topology according to an example;
FIG. 5 illustrates a circuit diagram of a power converter topology according to an example;
FIG. 6 illustrates a process for controlling a power converter according to an example; and
FIG. 7 illustrates a process for controlling a power converter according to an example.

### DETAILED DESCRIPTION

In power converters, such as AC/AC power converters, as well as DC/DC, AC/DC, and DC/AC power converters, some topologies may only be able to conduct power in one direction at a time using a given bus. For example, during a positive power cycle, current may be conducted from a power input to a power output along a first power bus, and during a negative power cycle, current may be conducted from the power output to the power input along a second power bus. The availability of the first and second power busses may be determined by respective switches coupled along those power busses and between the power input and power output. Likewise, to permit conditioning of the power, additional switches may be configured to selectively couple one or more DC busses to the power busses to permit voltages on said power busses to be pulled to the voltage of the connected DC bus. An example of such a topology may be found in U.S. Patent No. 10,491,137 (to Mouridsen), which is hereby incorporated by reference in its entirety for all purposes.

Power converters of the foregoing type can introduce conduction and/or switching losses, however. These losses can occur as switches in the system turn on and off when the system switches from one power cycle to another-for example, from a positive power cycle to a negative power cycle. These losses can be relatively substantial, in some examples accounting for efficiency losses of 0.25%, 0.5%, 1%, 1.5%, and so forth. For high efficiency systems, these losses are significant and can mean the difference between reaching 99% system efficiency or falling short. Furthermore, over a lifetime of operation, the losses can amount to significant extra operational costs as a proportional amount of additional power may be needed to offset the losses. Topologies disclosed herein can improve efficiency of such power systems. In some examples, efficiency may be improved by 0.1%, 0.2%, 0.5%, 1%, 5%, and so forth. In general, the efficiency improvement is greater than zero.

Topologies disclosed herein improve efficiency at least in part by permitting two or more power busses to conduct at the same time and to conduct current both from input to output as well as from output to input, that is, in "both directions". Topologies disclosed herein may also permit conduction in both directions (e.g., to or from DC busses) during the same power cycle. By permitting bidirectional conduction, conduction losses may be reduced.

Topologies disclosed herein use, in some examples, additional switches coupled between the DC busses and the power busses to provide additional control over the conducting paths through the system. Likewise, some examples may use fewer switches to accomplish the same goal. In examples using additional switches, the switches may help to facilitate the reduction in switching events that may contribute to the efficiency improvements described above.

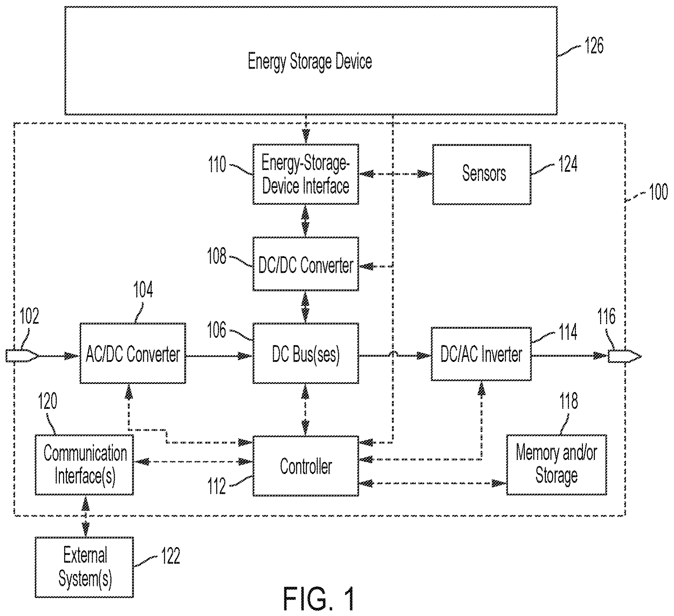

FIG. 1 is a block diagram of a UPS 100 according to an example. The UPS 100 includes an input 102, an AC/DC converter 104, one or more DC busses 106, a DC/DC converter 108, an energy-storage-device interface 110, at least one controller 112 ("controller 112"), a DC/AC inverter 114, an output 116, a memory and/or storage 118, one or more communication interfaces 120 ("communication interfaces 120"), which may be communicatively coupled to one or more external systems 122 ("external systems 122"), and one or more voltage sensors and/or current sensors 124 ("sensors 124").

The input 102 is coupled to the AC/DC converter 104 and to an AC power source (not pictured), such as an AC mains power supply. The AC/DC converter 104 is coupled to the input 102 and to the one or more DC busses 106, and is communicatively coupled to the controller 112. The one or more DC busses 106 are coupled to the AC/DC converter 104, the DC/DC converter 108, and to the DC/AC inverter 114, and are communicatively coupled to the controller 112. The DC/DC converter 108 is coupled to the one or more DC busses 106 and to the energy-storage-device interface 110, and is communicatively coupled to the controller 112. The energy-storage-device interface 110 is coupled to the DC/DC converter 108, and is configured to be coupled to at least one energy-storage device 126 and/or another energy-storage device.

In some examples, the UPS 100 may be external to the at least one energy-storage device 126 and may be coupled to the at least one energy-storage device 126 via the energy-storage-device interface 110. In various examples, the UPS 100 may include one or more energy-storage devices, which may include the energy-storage device 126. The energy-storage device 126 may include one or more batteries, capacitors, flywheels, or other energy-storage devices in various examples.

The DC/AC inverter 114 is coupled to the one or more DC busses 106 and to the output 116, and is communicatively coupled to the controller 112. The output 116 is coupled to the DC/AC inverter 114, and to an external load (not pictured). The controller 112 is communicatively coupled to the AC/DC converter 104, the one or more DC busses 106, the DC/DC converter 108, the energy-storage-device interface 110, the DC/AC inverter 114, the memory and/or storage 118, and the communication interfaces 120. The sensors 124 are communicatively coupled to the controller 112 and may be coupled to one or more other components of the UPS 100, such as the input 102, the AC/DC converter 104, the one or more DC busses 106, the DC/DC converter 108, the energy-storage-device interface 110, the DC/AC inverter 114, and/or the output 116.

The input 102 is configured to be coupled to an AC mains power source and to receive input AC power having an input voltage level. The UPS 100 is configured to operate in different modes of operation based on the input voltage of the AC power provided to the input 102. The controller 112 may determine a mode of operation in which to operate the UPS 100 based on whether the input voltage of the AC power is acceptable. The controller 112 may include or be coupled to one or more sensors, such as the sensors 124, configured to sense parameters of the input voltage. For example, the sensors 124 may include one or more voltage and/or current sensors coupled to the input 102 and being configured to sense information indicative of a voltage at the input 102 and provide the sensed information to the controller 112.

When AC power provided to the input 102 is acceptable (for example, by having parameters, such as an input voltage value, that meet specified values, such as by falling within a range of acceptable input voltage values), the controller 112 controls components of the UPS 100 to operate in a normal mode of operation. In the normal mode of operation, AC power received at the input 102 is provided to the AC/DC converter 104. The AC/DC converter 104 converts the AC power into DC power and provides the DC power to the one or more DC busses 106. The one or more DC busses 106 distribute the DC power to the DC/DC converter 108 and to the DC/AC inverter 114. The DC/DC converter 108 converts the received DC power and provides the converted DC power to the energy-storage-device interface 110. The energy-storage-device interface 110 receives the converted DC power, and provides the converted DC power to the energy-storage device 126 to charge the energy-storage device 126. The DC/AC inverter 114 receives DC power from the one or more DC busses 106, converts the DC power into regulated AC power, and provides the regulated AC power to the output 116 to be delivered to a load.

When AC power provided to the input 102 from the AC mains power source is not acceptable (for example, by having parameters, such as an input voltage value, that do not meet specified values, such as by falling outside of a range of acceptable input voltage values), the controller 112 controls components of the UPS 100 to operate in a backup mode of operation. In the backup mode of operation, DC power is discharged from the energy-storage device 126 to the energy-storage-device interface 110, and the energy-storage-device interface 110 provides the discharged DC power to the DC/DC converter 108. The DC/DC converter 108 converts the received DC power and distributes the DC power amongst the one or more DC busses 106. For example, the DC/DC converter 108 may evenly distribute the power amongst the one or more DC busses 106. The one or more DC busses 106 provide the received power to the DC/AC inverter 114. The DC/AC inverter 114 receives the DC power from the one or more DC busses 106, converts the DC power into regulated AC power, and provides the regulated AC power to the output 116.

In some examples, the sensors 124 may include one or more sensors coupled to one or more of the foregoing components such that a voltage and/or current of one or more of the foregoing components may be determined by the controller 112. The controller 112 may store information in, and/or retrieve information from, the memory and/or storage 118. For example, the controller 112 may store information indicative of sensed parameters (for example, input-voltage values of the AC power received at the input 102) in the memory and/or storage 118. The controller 112 may further receive information from, or provide information to, the communication interfaces 120. The communication interfaces 120 may include one or more communication interfaces including, for example, user interfaces (such as display screens, touch-sensitive screens, keyboards, mice, track pads, dials, buttons, switches, sliders, light-emitting components such as light-emitting diodes, sound-emitting components such as speakers, buzzers, and so forth configured to output sound inside and/or outside of a frequency range audible to humans, and so forth), wired communication interfaces (such as wired ports), wireless communication interfaces (such as antennas), and so forth, configured to exchange information with one or more systems, such as the external systems 122, or other entities, such as human beings. The external systems 122 may include any device, component, module, and so forth, that is external to the UPS 100, such as a server, database, laptop computer, desktop computer, tablet computer, smartphone, central controller or data-aggregation system, other UPSs, and so forth.

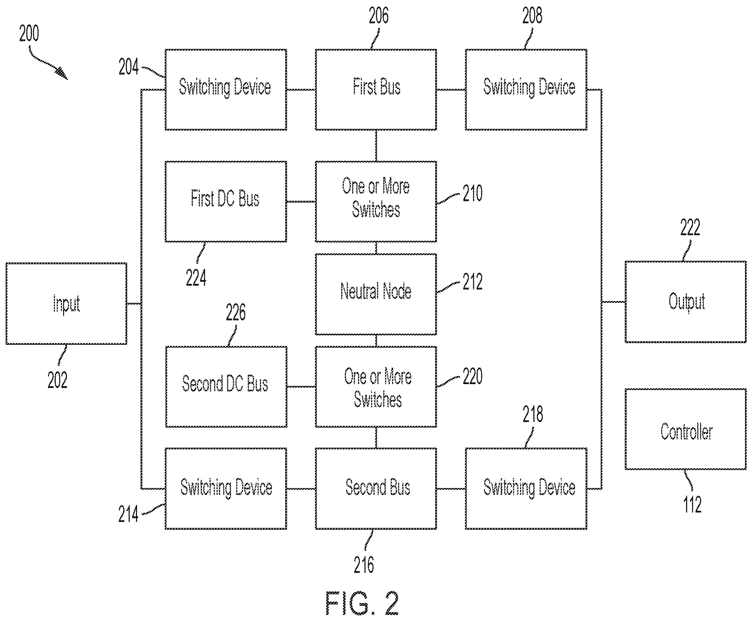

FIG. 2 is a high-level block diagram of a power converter 200 according to an example. The power converter 200 has a switching topology that permits each power bus to conduct current in both directions at the same time. The power converter 200 may correspond to one or more of the AC/DC converter 104, DC busses 106, DC/DC converter 108, and/or DC/AC inverter 114 of FIG. 1 in some examples.

The power converter 200 includes the controller 112, an input 202, a first switching device 204 ("first switch 204"), a first power bus 206, a second switching device 208 ("second switch 208"), a first set of one or more switching devices 210 ("first set of switches 210"), a neutral node 212, a third switching device 214 ("third switch 214"), a second power bus 216, a fourth switching device 218 ("fourth switch 218"), a second set of one or more switching devices 220 ("second set of switches 220"), an output 222, a first DC bus 224, and a second DC bus 226.

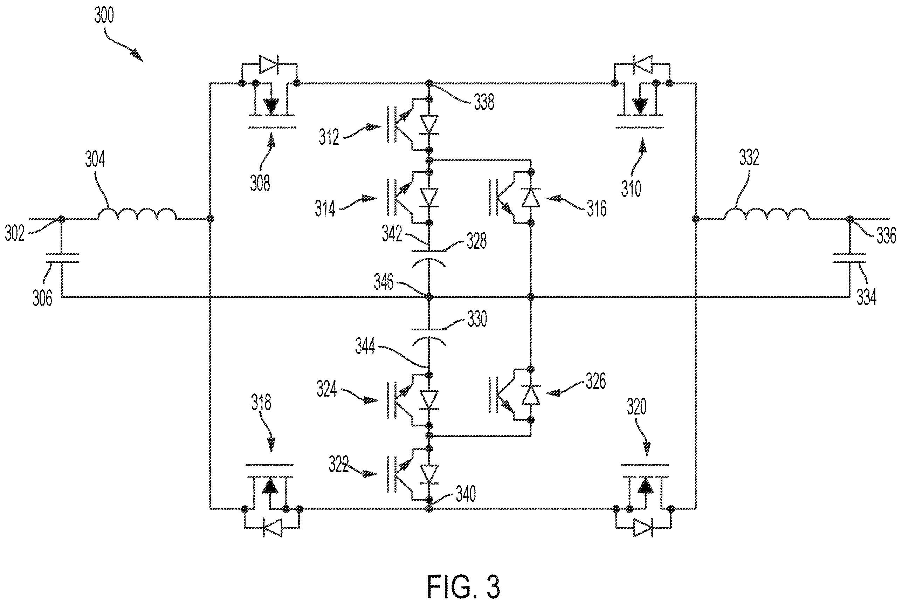

The power converter 200 works, in at least some examples, by the controller 112 opening and/or closing specific switches of the first set of one or more switching devices 210 and/or the second set of one or more switching devices 220 depending on other criteria (for example, whether the power being provided to the power converter 200 is positive or negative in polarity). By opening and/or closing the switching devices, the controller 112 may control the internal configuration of the power converter 200 so that the first power bus 206 and the second power bus 216 have the same voltage level at a given time, or such that the first power bus 206 and the second power bus 216 may swing through a range of voltage levels that permit, for example, the first power bus 206 to drop to a much lower voltage than is permitted in existing topologies, and/or the second power bus 216 to increase to a much higher voltage than is permitted in existing topologies. FIGS. 3-5 discuss various examples of different implementations and embodiments of the power converter 200.

The input 202 is coupled to the first switch 204 and to the third switch 214. The first switch 204 is coupled to the first power bus 206. The first power bus 206 is coupled to the first set of switches 210 and to the second switch 208. The second switch 208 is coupled to the output 222 and to the fourth switch 218. The first set of switches 210 is coupled to the neutral node 212. The neutral node is coupled to the second set of switches 220. The third switch 214 is coupled to the second power bus 216. The second power bus 216 is coupled to the second set of switches 220 and to the fourth switching device 218. The fourth switching device 218 is coupled to the output 222. The first DC bus 224 is coupled to the first set of switches 210, the second DC bus 226 is coupled to the second set of switches 220.

The input 202 is configured to receive power (for example, from an AC utility mains supply) and to either provide the power to the other elements of the power converter 200 and/or to provide the power to a device, node, load, or other element coupled to the input 202.

The output 220 is configured to receive power and to either provide the power to the other elements of the power converter 200 and/or to provide the power to a device, node, load, or other element coupled to the output 220.

The first switch 204 is coupled between the input 202 and the first bus 206. The first switch 204 is configured to be controlled to be in an open state (e.g., not appreciably conducting) or closed state (e.g., conducting). The first switch 204 may be open or closed to prevent or permit current from traveling between the input 202 and the first bus 206 through the first switch 204.

The second switch 208 has an open state and a closed state, and is configured to be controlled to be in said states. The second switch 208 may be closed to permit current to travel between the first bus 206 and the output 222, or may be closed to prevent such travel.

The first bus 206 is a conductor configured to conduct current.

The third switch 214 is coupled between the input 202 and the second bus 216. The third switch 214 is configured to be controlled to be in an open state (e.g., not appreciably conducting) or closed state (e.g., conducting). The third switch 214 may be open or closed to prevent or permit current from traveling between the input 202 and the second bus 216 through the third switch 214.

The fourth switch 218 has an open state and a closed state, and is configured to be controlled to be in said states. The fourth switch 218 may be closed to permit current to travel between the second bus 216 and the output 222, or may be closed to prevent such travel.

The second bus 216 is a conductor configured to carry current.

The neutral node 212 is a node configured to be coupled to a reference voltage and/or to a ground.

The first set of switches 210 is configured to selectively connect the first bus 206 to a DC bus and/or to the neutral node, and is further configured to selectively permit current to travel from either the output 222 to the input 202 or the input 202 to the output 222 via the first bus 206. Examples of configurations will be discussed in greater detail below, however, in some examples, a switch of the first set of switches 210 will be open (e.g., not conducting) in modes of operation that permit current to travel in both directions between input 202 and output 222 through the first bus 206.

The second set of switches 220 is configured to selectively connect the second bus 216 to a DC bus and/or to the neutral node, and is further configured to selectively permit current to travel from either the output 222 to the input 202 or the input 202 to the output 222 via the second bus 216. Examples of configurations will be discussed in greater detail below, however, in some examples, a switch of the second set of switches 220 will be open (e.g., not conducting) in modes of operation that permit current to travel in both directions between input 202 and output 222 through the second bus 216.

The first DC bus 224 is configured to provide a first DC voltage. The second DC bus 226 is configured to provide a second DC voltage. The first and second DC voltages may have the same or different values (e.g., both could be at 5V, or one could be at 6V and the other -3V, and so forth, permitting any combination of voltages desired). In some examples, the DC busses 224, 226 may instead be configured to provide periodic voltages or time-varying voltages.

FIG. 3 illustrates a circuit diagram of a power converter 300 according to an example. The power converter 300 may be one example of an implementation of the power converter 200 of FIG. 2.

The power converter 300 includes an input 302, an input inductance 304, an input capacitance 306, a first switching device 308, a second switching device 310, a third switching device 312, a fourth switching device 314, a fifth switching device 316, a sixth switching device 318, a seventh switching device 320, an eighth switching device 322, a nineth switching device 324, a tenth switching device 326, a first capacitor 328, a second capacitor 330, an output inductance 332, an output capacitance 334, an output 336, a first power bus 338, a second power bus 340, a first DC bus 342, a second DC bus 344, and a neutral node 346.

The input 302 is configured to be coupled to an AC power source (not illustrated) and is coupled to the input inductance 304 and the input capacitance 306. The input capacitance 306 is coupled to the neutral node 346. The input inductance 304 is coupled to the first switching device 308 and the sixth switching device 318.

The first switching device 308 is coupled to the first power bus 338. The first power bus 338 is coupled to the second switching device 310 and the third switching device 312. The third switching device 312 is coupled to the fourth switching device 314 and the fifth switching device 316. The fifth switching device 316 is coupled to the neutral node 346. The fourth switching device 314 is coupled to the first DC bus 342. The first DC bus 342 is coupled to the first capacitor 328. The first capacitor 328 is coupled to the neutral node 346.

The sixth switching device 318 is coupled to the second power bus 340. The second power bus 340 is coupled to the seventh switching device 320 and to the eighth switching device 322. The eighth switching device 322 is coupled to the ninth switching device 324 and the tenth switching device 326. The tenth switching device 326 is coupled to the neutral node 346. The ninth switching device 324 is coupled to the second DC bus 344. The second DC bus 344 is coupled to the second capacitor 330. The second capacitor 330 is coupled to the neutral node 346.

The output inductance 332 is coupled to the second switching device 310 and the seventh switching device 320. The output capacitance 334 is coupled to the neutral node 346. The output 336 is coupled to the output inductance 332 and to the output capacitance 334.

Each switching device 308-326 may be coupled to a controller or configured to be controlled by a controller (not illustrated), such as the controller 112 of FIG. 1. For example, each switching device 308-326 may have a control connection (such as a gate connection) to which a controller can provide (directly or indirectly) a control signal.

Furthermore, each switching device 308-326 may also include both a switch (or switching element) that is capable of having an open (e.g., non-conducting) and closed (e.g., conducting) state, as well as a diode. The switching element and diode may be coupled as a parallel set. The diodes may be arranged to permit current to travel along particular routes through the circuit regardless of whether the diode's corresponding switching element is open or closed.

For example, as illustrated in FIG. 3, the anode of the diode of the first switching device 308 is coupled to the input inductance 304 and the cathode of the diode of the first switching device 308 is coupled to the first power bus 338. Likewise, the cathode of the diode of the second switching device 310 is coupled to the first power bus 338 and the corresponding anode is coupled to the output inductance 332. The anode of the diode of the third switching device 312 is coupled to the first power bus 338, and the corresponding cathode is coupled to the anode of the diode of the fourth switching device 314 and to the cathode of the diode of the fifth switching device 316. The anode of the fifth switching device 316 is coupled to the neutral node 346, and the cathode of the fourth switching device 314 is coupled to the first DC bus 342.

In contrast, the cathode of the diode of the sixth switching device 318 is coupled to the input inductance 304, and the corresponding anode is coupled to the second power bus 340. Correspondingly, the anode of the diode of the seventh switching device 320 is coupled to the first second power bus 340, and the corresponding cathode is coupled to the output inductance 332. The cathode of the diode of the eighth switching device 322 is coupled to the second power bus 340, and the corresponding anode is coupled to the cathode of the diode of the ninth switching device 324 and to the anode of the diode of the tenth switching device 326. The cathode of the diode of the tenth switching device 326 is coupled to the neutral node 346, and the anode of the diode of the ninth switching device is coupled to the second DC bus 344.

As a result of the above configuration of diodes, current may pass from either input 302 or output 336 through the first or second switching devices 308, 310 (regardless of state of the corresponding switching elements of said switching devices), respectively, through the third and fourth switching devices 312, 314 to at least the first DC bus 342. In contrast, current can conduct from the second DC bus 344 through the eighth and ninth switching device 322, 324 to the second power bus 340 and then through the sixth switching device 318 to the input 302, or through the seventh switching device 320 to the output 336 regardless of the state of the switching devices 318-324.

Thus, in general, current can always travel through the power converter 300 through the diodes provided a sufficient voltage differential exists to permit a current to form across the respective anode and cathode of the respective diodes.

The power converter 300 may be configured such that current can travel along one or more of the power busses 338, 340 in both directions (from input 302 to output 336 or from output 336 to input 302) in certain modes of operation.

In some examples, when input power with a positive voltage is provided at the input 302, the first switching device 308 and second switching device 310 will be in closed states permitting current to be provided to the output 336 (that is, the current is positive) and the output 336 to provide output power (for example, to a load). During this mode of operation, the sixth switching device 318 and seventh switching device 320 may be in an open state.

In some examples, when input power with a negative voltage is provided at the input 302, the sixth switching device 318 and seventh switching device 320 will be in a closed state so that output power (for example, with a negative current) may be provided at the output 336. During this mode of operation, the first switching device 308 and second switching device 310 may be in an open state.

Similar or identical operation may occur during positive and negative cycles of input power provided to the input 302 (e.g., when the input power has a negative polarity, current may travel from the output 336 to the input 302, and so forth). As a result, when transitioning from positive to negative cycles (or when the polarity of the current or input voltage changes), the power converter 300 may switch one or more of the first, second, sixth, or seventh switching devices 308, 310, 318, 320 from open to closed or closed to open as desired. Such operation can cause a reduction in the efficiency of the power converter 300 because current may be provided along only either the first power bus 338 or second power bus 340, resulting in larger conduction losses.

To avoid such efficiency reduction, the power converter 300 may be operated in a mode where each of the first, second, sixth, and seventh switching devices 308, 310, 318, 320 are closed, and one of the third switching device 312 and/or eighth switching device 322 is open. In some examples, the third switching device 312 may be open during one cycle, for example, the positive power cycle, and the third switching device 312 may be closed during a different cycle, for example, the negative power cycle. Likewise, the ninth switching device 322 may be open during one cycle, for example, a negative power cycle, and closed during a different cycle, for example, the positive power cycle.

When considering the effect of such a configuration on the power converter 300, note that the first power bus 338 and second power bus 340 are effectively connected to one another when the first, second, sixth, and seventh switching devices 308, 310, 318, 320 are closed. Thus, the power busses 338, 340 are able to share the same voltage level. At the same time, during a given power cycle, if the third switching device 312 is open, the fourth and fifth switching devices 314, 316-whether open or closed-will not appreciably change the voltage level on the first power bus 338. Instead, since the eighth switching device 322 may be closed, the ninth and tenth switching devices 324, 326 may be controlled to selectively couple the second power bus 340 to either the neutral node 346 (as would be the case with the tenth switching device 326 closed and the ninth switching device 324 open), or to the second DC bus 344 (as would be the case with the tenth switching device 326 open and the ninth switching device 324 closed).

A similar mode of operation can be achieved with the eighth switching device 322 open, ensuring that the ninth and tenth switching devices 324, 326-regardless of state-do not appreciably affect the voltage on the second power bus 340. Then, instead, with the third switching device 312 closed, the fourth and fifth switching devices 314, 316 may be operated (e.g., opened or closed) to selectively couple the first power bus 338 to either the first DC bus 342 or to the neutral node 346.

The fourth, fifth, ninth and tenth switching devices 314, 316, 324, 326 may be opened and closed as desired to selectively couple the power busses 338, 340 to the neutral node 346 and/or to one of the DC busses 342, 344. In some examples, provided the third switching device 312 is closed, if the fourth switching device 314 is closed and the fifth switching device 316 is open, the first power bus 338 may be pulled to the voltage of the first DC bus 342. If the fourth switching device 314 is open and the fifth switching device 316 is closed, the first power bus 338 may be pulled to the voltage of the neutral node 346. Likewise, provided the eighth switching device 322 is closed, if the ninth switching device 324 is closed and the tenth switching device 326 is open, the second power bus 340 may be pulled to the voltage of the second DC bus 344, and if the ninth switching device 324 is open and the tenth switching device 326 is closed, the second power bus 340 may be pulled to the voltage of the neutral node 346.

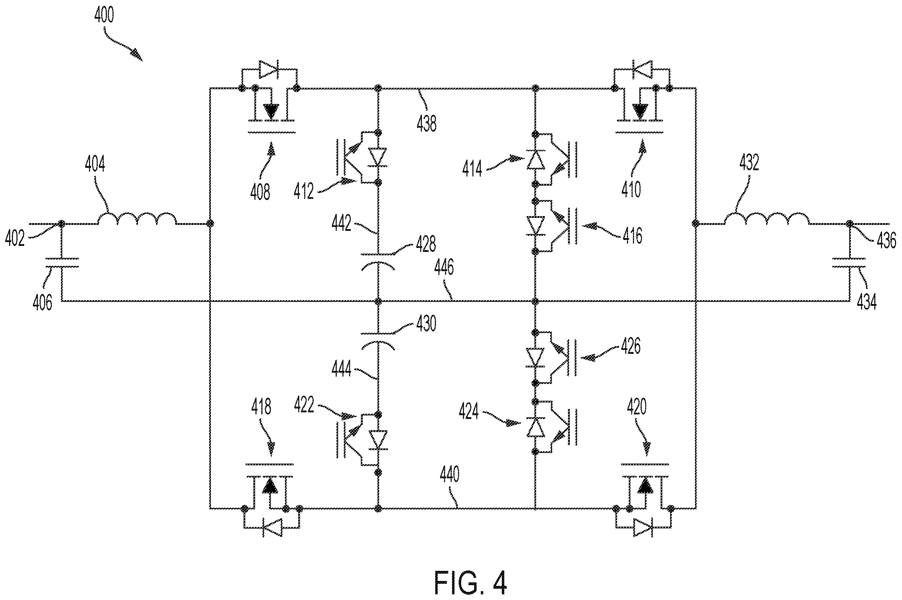

FIG. 4 illustrates a circuit diagram of a power converter 400 according to an example. The power converter 400 functions similarly to the power converter 300, as will be discussed below. The power converter 400 includes an input 402, an input inductance 404, an input capacitance 406, a first switching device 408, a second switching device 410, a third switching device 412, a fourth switching device 414, a fifth switching device 416, a sixth switching device 418, a seventh switching device 420, an eighth switching device 422, a nineth switching device 424, a tenth switching device 426, a first capacitor 428, a second capacitor 430, an output inductance 432, an output capacitance 434, an output 436, a first power bus 438, a second power bus 440, a first DC bus 442, a second DC bus 444, and a neutral node 446.

The input 402 is coupled to the input inductance 404 and the input capacitance 406. The input capacitance 406 is coupled to the neutral node 446. The input inductance 404 is coupled to the first switching device 408 and the sixth switching device 418.

The first switching device 408 is coupled to the first power bus 438. The first power bus 438 is coupled to the second switching device 410, the third switching device 412, and the fourth switching device 414. The third switching device 412 is coupled to the first DC bus 442. The first DC bus 442 is coupled to the first capacitor 428. The first capacitor 428 is coupled to the neutral node 446. The fourth switching device 414 is coupled to the fifth switching device 416. The fifth switching device 416 is coupled to the neutral node 446.

The sixth switching device 418 is coupled to the second power bus 440. The second power bus 440 is coupled to the seventh switching device 420, the eighth switching device 422, and the ninth switching device 424. The ninth switching device 424 is coupled to the tenth switching device 426. The tenth switching device 426 is coupled to the neutral node 446. The eighth switching device 422 is coupled to the second DC bus 444. The second DC bus 444 is coupled to the second capacitor 430. The second capacitor 430 is coupled to the neutral node 446.

The output inductance 432 is coupled to the second switching device 410 and the seventh switching device 420. The output capacitance 434 is coupled to the neutral node 446. The output 436 is coupled to the output inductance 432 and to the output capacitance 434. The output 436 is configured to be coupled to a load or power source. The input 402 is configured to be coupled to a power source or load.

Each switching device 408-426 may be coupled to a controller or configured to be controlled by a controller (not illustrated), such as the controller 112 of FIG. 1. For example, each switching device 408-426 may have a control connection (such as a gate connection) to which a controller can provide (directly or indirectly) a control signal.

Furthermore, each switching device 408-426 may also include both a switch (or switching element) that is capable of having an open (e.g., non-conducting) and closed (e.g., conducting) state, as well as a diode. The switching element and diode may be coupled as a parallel set. The diodes may be arranged to permit current to travel along particular routes through the circuit regardless of whether the diode's corresponding switching element is open or closed.

For example, as illustrated in FIG. 4, an anode of the diode of the third switching device 412 is coupled to the first power bus 438, and the corresponding cathode is coupled to the first DC bus 442. An anode of the diode of the fourth switching device 414 is coupled to an anode of the diode of the fifth switching device 416, and the corresponding cathode is coupled to the first power bus 438. The cathode of the diode of the fifth switching device 416 is coupled to the neutral node 446.

In contrast, a cathode of the diode of the eighth switching device 422 is coupled to the second power bus 440, and the corresponding anode is coupled to the second DC bus 444. An anode of the diode of the ninth switching device 424 is coupled to the second power bus 440, and the corresponding cathode is coupled to the cathode of the diode of the tenth switching device 426. The anode of the diode of the tenth switching device 426 is coupled to the neutral node 446.

In the power converter 400, the positions and relative couplings of the fourth switching device 414 and fifth switching device 416 may be flipped relative to each other. Likewise, the positions and relative couplings of the ninth switching device 424 and tenth switching device 426 may be flipped. The switching devices of these respective pairs (that is, a first pair including the switching devices 414, 416, and a second pair including the switching devices 424, 426) are in series with one another. For example, the first pair of switching devices 414, 416 is coupled in series between the first power bus 438 and the neutral node 446, and the second pair of switching devices 424, 426 is coupled in series between the neutral node 446 and the second power bus 440.

Accordingly, the precise order of the switching devices 414, 416, 424, 426 may be changeable. For example, instead of the fourth switching device 414 being coupled to the first power bus 438, the fifth switching device 416 may be coupled to the first power bus 438, and instead of the fifth switching device 416 being coupled to the neutral node 446, the fourth switching device 414 may be coupled to the neutral node 446. If diodes are attached to the switches in these alternate arrangements, the relative position of their anodes and cathodes with respect to the switch element may remain the same (e.g., the anode of the fifth switching device 416 may be coupled to the first power bus 438, and the anode of the fourth switching device 414 may be coupled to the neutral node 446, while the cathodes are then coupled to one another).

During operation, if current should be permitted to travel through both power busses 438, 440 in both directions, then the fifth switching device 416 may be open during one power cycle, and the tenth switching device 426 may be open during a different power cycle. For example, the fifth switching device 416 may be closed during a positive power cycle and open during a negative power cycle, and the tenth switching device 426 may be closed during a negative power cycle and open during a positive power cycle.

The third switching device 412, fourth switching device 414, eighth switching device 422, and ninth switching device 424 may be selectively opened and/or closed to connect a given one of the power busses 438, 440 to the neutral node 446 and/or to one of the DC busses 442, 444, for example, to condition the power. For example, closing the third switching device 412 may pull the first power bus 438 to the voltage of the first DC bus 442, whereas closing the fourth switching device 414 while the fifth switching device 416 is closed may pull the first power bus 438 to the voltage of the neutral node 446. Likewise, closing the eighth switching device 422 may pull the voltage of the second power bus 440 to the voltage of the second DC bus 444, while closing the ninth switching device 424 while the tenth switching device 426 is closed may pull the voltage of the second power bus 440 to the voltage of the neutral node 446.

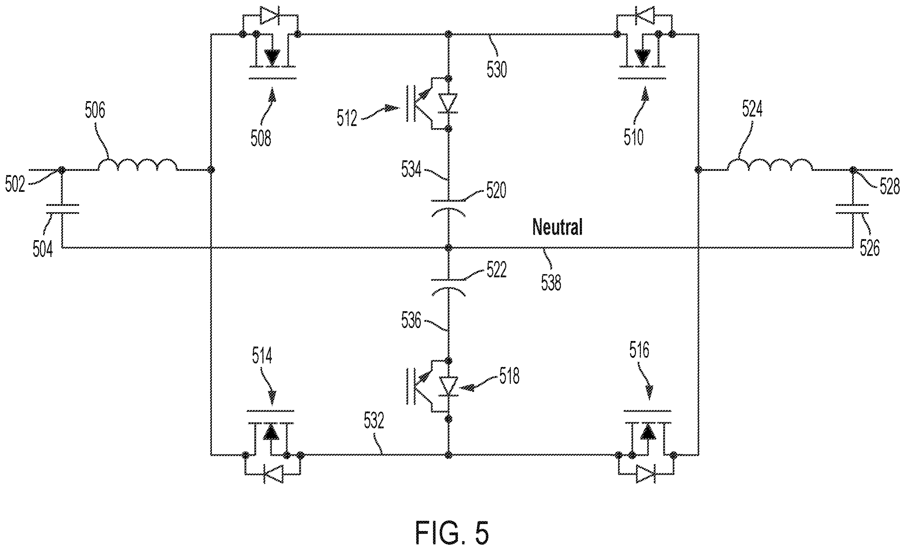

FIG. 5 illustrates a circuit diagram of a power converter 500 according to an example. The power converter 500 works similarly to the power converters 300, 400, but uses fewer switching devices overall. The power converter 500 includes an input 502, an input capacitance 504, an input inductance 506, a first switching device 508, a second switching device 510, a third switching device 512, a fourth switching device 514, a fifth switching device 516, a sixth switching device 518, a first capacitor 520, a second capacitor 522, an output inductance 524, an output capacitance 526, an output 528, a first power bus 530, a second power bus 532, a first DC bus 534, a second DC bus 536, and a neutral node 538.

The input 502 is coupled to the input capacitance 504 and the input inductance 506. The input capacitance 504 is coupled to the neutral node 538. The input inductance 506 is coupled to the first switching device 508 and the fourth switching device 514. The first switching device 508 is coupled to the first power bus 530. The first power bus 530 is coupled to the second switching device 510 and third switching device 512. The third switching device 512 is coupled to the first DC bus 534. The first DC bus 534 is coupled to the first capacitor 520. The first capacitor 520 is coupled to the neutral node 538. The fourth switching device 514 is coupled to the second power bus 532. The second power bus 532 is coupled to the fifth switching device 516 and sixth switching device 518. The sixth switching device 518 is coupled to the second DC bus 536. The second DC bus 536 is coupled to the second capacitor 522. The second capacitor 522 is coupled to the neutral node 538. Second switching device 510 and fifth switching device 516 are coupled to the output inductance 524. The output inductance 524 is coupled to the output 528. The neutral node 538 is coupled to the output capacitance 526. The output capacitance 526 and output inductance 524 are coupled to the output 528.

In some examples, during a positive power cycle, current may conduct bidirectionally between the input 502 and output 528 provided the third switching device 512 is open, the first and second switching devices 508, 510 are closed, and/or the fourth and fifth switching devices 514, 516 are open. In some examples, during a negative power cycle, current may conduct bidirectionally between the input 502 and output 528 provided the sixth switching device 518 is open, the fourth and fifth switching devices 514, 516 are closed, and/or the first and second switching devices 508, 510 are open.

Note that, in FIG. 5, the power converter 500 may omit switching devices that directly couple the power busses 530, 532 to the neutral node 538.

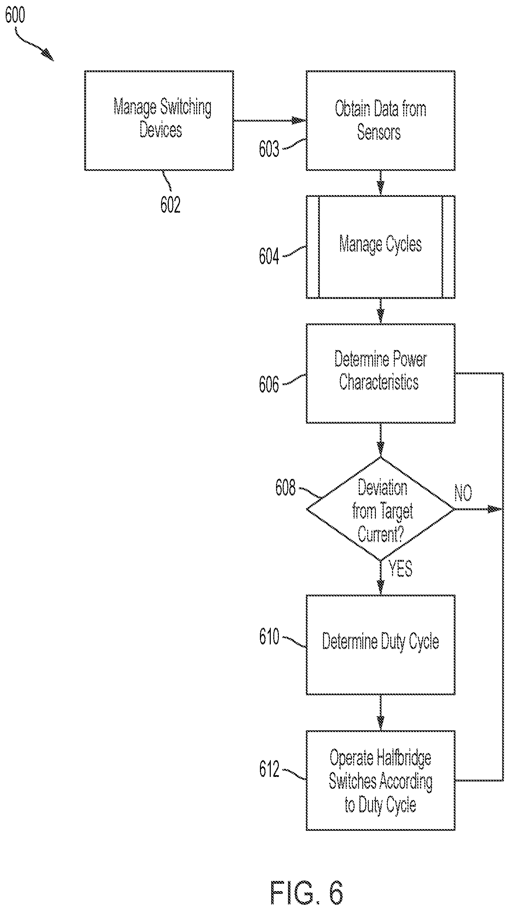

FIG. 6 illustrates a process 600 for controlling a power converter according to an example. The power converter may be, for example, any of the power converters 300-500, or any other equivalent topology. The process 600 may be executed by the controller 112.

At act 602, a controller-such as the controller 112 of FIG. 1-that is configured to control the switching devices of the power converter (either directly or indirectly) may cause each of the switching devices to switch into a respective open or closed state. The controller 112 may, for example, control the switching devices to connect the input and the output. For example, with reference to FIG. 3 as an example, the controller 112 may control the first switching device 308, second switching device 310, sixth switching device 318, and seventh switching device 320 to be in a closed state so that there are one or more available conducting routes between the input 302 and output 336. The process 600 may then continue to act 603.

At act 603, the controller may obtain data pertaining to a state of the power converter and/or UPS using the sensors (for example, the sensors 124 of the UPS). The obtained data may include any characteristics of the power being transferred via the power converter, including but not limited to the voltage level, current level, polarity, phase, and so forth.

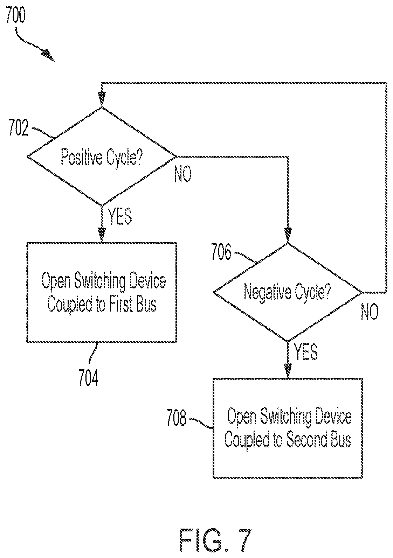

At act 604, the controller may determine a power cycle of the power converter or of the UPS (e.g., based on polarity, phase, or any other criteria), and may open one or more switches depending on the power cycle to facilitate the power converter conducting both ways during the power cycle. Continuing with reference to FIG. 3, during a first power cycle (e.g., a positive power cycle), the controller may cause the third switching device 312 to be in an open state and the eighth switching device 322 to be in a closed state, thereby permitting the voltages on at least one of the power busses 338, 340 to be pulled to the voltage of the second DC bus 344. During a second power cycle (e.g., a negative power cycle), the controller may cause the third switching device 312 to be in a closed state and the eighth switching device 322 to be in an open state, thereby permitting the voltages on at least one of the power busses 338, 340 to be pulled to the voltage of the first DC bus 342. In some examples, both relevant switching devices may be opened or may be closed at the same time, as the power converters discussed herein are capable of such configuration which may be used for some modes of operation, for example, those modes of operation where one-directional conduction, rather than bidirectional conduction, is desired. As discussed in greater detail below, FIG. 7 illustrates an example of act 604. The process 600 may then continue to act 606.

At act 606, the controller may determine one or more characteristics of the power being provided by the power converter, including one or more characteristics of the associated voltage and/or current. The one or more characteristics of the voltage and/or current may include amplitudes, frequencies, phases, direction, or any other characteristic. The controller may determine the one or more characteristics using sensors, and may derive the characteristics through direct measurement or calculation based on related measurements (e.g., in the same way current or voltage can be directly measured, and different measures of power can be indirectly calculated based on current and voltage). For example, the controller 112 may receive the one or more power characteristics from the sensors 124. In some examples, the controller may determine a current from the input 302 to the output 336. The process 600 may then continue to act 608.

At act 608, the controller determines if a selected characteristic deviates from a target value by more than a threshold amount. For example, the controller may determine if the current deviates from a target current by more than 0.5%, 1%, 5%, 50%, or any other value. By determining whether the current deviates by more than the threshold amount, the controller can condition the power on the power busses 338, 340 using pulse width modulation or other techniques to correct and/or eliminate the deviation. In some examples, the controller may constantly adjust the duty cycle to maintain the current within the threshold amount of the target value. If the controller determines that the selected characteristic does not deviate by the threshold amount (608 NO), the process 600 may return to act 606 (or any other earlier act) and repeat until such time as the characteristic is found to deviate from the target value by the threshold amount. If the controller determines that the characteristic deviates from the target value by the threshold amount or more (608 YES), the process 600 may continue to act 610.

At act 610, the controller determines a duty cycle at which to operate one or more switching devices in order to correct the deviation in the selected characteristic. For example, the controller may determine a duty cycle for the switching devices 312-316, 322-326 whereby pulling the voltages on one or more of the power busses 338, 340, for example by using pulse width modulation, to a voltage of one of the DC busses 342, 344 will correct the deviation. The process 600 may then continue to act 612.

At act 612, the controller may operate the switching devices to open and close according to the duty cycle determined during act 610. Such operation may typically involve opening and closing one or more switching devices of the third, fourth, and/or fifth switching devices 312, 314, 316 as a set (though they can also be operated individually) according to the duty cycle, and/or opening and closing one or more switching devices of the eighth, ninth, and/or tenth switching devices 322, 324, 326 as a set (though they can also be operated individually) according to the duty cycle.

As discussed above, FIG. 7 provides an example of act 604. FIG. 7 illustrates a process 700 of opening and closing certain switching devices to facilitate bidirectional conduction between a power-converter input and a power-converter output. For example, using FIG. 3 as an example, to the process 700 may facilitate bidirectional conduction between the input 302 and output 336 of a power converter 300.

At act 702, the controller (e.g., controller 112 of FIG. 1) determines whether power converter 300 is currently experiencing a positive power cycle. If the controller determines the power converter is experiencing a positive cycle (702 YES), the process 700 may continue to act 704. If the controller determines the power converter is not experiencing a positive cycle (702 NO), the process 700 may continue to act 706.

At act 704, the controller may open one switching device and close another switching device corresponding to the configuration for bidirectional conduction during the positive power cycle. For example, the controller may control the third switching device 312 to be open, and the eighth switching device 322 to be closed.

Returning to act 702, when the controller determines that the power converter is not in a positive power cycle, the process 700 proceeds to act 706.

At act 706, the controller determines if the power converter 300 is experiencing a negative power cycle. If the controller determines the power converter 300 is not experiencing a negative power cycle (706 NO), the process 700 returns to act 702. If the controller determines the power converter is experiencing a negative power cycle (706 YES), the process 700 may continue to act 708.

At act 708, the controller may open one switching device and close another switching device corresponding to the configuration for bidirectional conduction during the negative power cycle. For example, the third switching device 312 may be closed, and the eighth switching device 322 may be open.

Note that, while FIG. 7 references current, the process 700 also applies to voltage or any other characteristics of the power being processed by the power converter 300 during the process 700. So, for example, the word "current" may be substituted with the word "voltage" in the foregoing discussion of FIG. 7.

During zero crossings, the power converters 300, 400, 500, and/or the controller 112 controlling the power converters 300, 400, 500, may be preprogrammed to behave in a predetermined way. For example, during a zero crossing the controller 112 may control the power converters 300, 400, 500 to remain in the state they were in prior to the zero crossing, and change state only after the zero crossing, or may control the power converters 300, 400, 500 to change state during the zero crossing. With reference to the process 700, this means any switching operations may occur during a zero crossing preceding a change from one power cycle to another, or the switching operations may wait until after the zero crossing ends.

In some examples in the foregoing discussion, the third switching device 312 of FIG. 3 corresponds to the fifth switching device 416 of FIG. 4, and the eighth switching device 322 of FIG. 3 corresponds to the tenth switching device 426 of FIG. 4. With respect to FIG. 5, the third switching device 512 may correspond to the third switching device 312 of FIG. 3 and the sixth switching device 518 may correspond to the eighth switching device 322 of FIG. 3. Thus, in some examples, with respect to the processes 600, 700 described above, reference to the third and eighth switching devices 312, 322 of FIG. 3 may be replaced with reference to the corresponding switching devices of the other topologies.

In the figures provided herein, various transistor and/or switch symbols have been used. In some examples, the switching devices and/or transistors may include or be one of more of t insulated-gate bipolar transistor (IGBT), silicon carbide (SiC) MOSFET, gallium nitride (GaN) transistors, and so forth. Other types of switches or transistors may also be used.

In the foregoing discussion, switching devices are often discussed as open or closed during a particular time. As explained above, "open" may mean "off" and/or not conducting, and "closed" may mean "on" and/or conducting. However, the switching devices may, in some examples, be controlled according to a duty cycle. For example, the switching devices may change states at intervals, and the intervals may be regular or irregular in length. For example, a pulse-width-modulation control scheme may be used to control the state (open or closed) of the switching devices. Therefore, the term "closed" may also mean "closed or in a switching state," and "open" may also mean "open or in a switching state" in addition to and/or in lieu of "on" and "off."

Examples of the methods and systems discussed herein are not limited in application to the details of construction and the arrangement of components set forth in the description or illustrated in the accompanying drawings. The methods and systems are capable of implementation in other embodiments and of being practiced or of being carried out in various ways. Examples of specific implementations are provided herein for illustrative purposes only and are not intended to be limiting. In particular, acts, components, elements and features discussed in connection with any one or more examples are not intended to be excluded from a similar role in any other examples.

Also, the phraseology and terminology used herein is for the purpose of description and should not be regarded as limiting. Any references to examples, embodiments, components, elements or acts of the systems and methods herein referred to in the singular may also embrace embodiments including a plurality, and any references in plural to any embodiment, component, element or act herein may also embrace embodiments including only a singularity. References in the singular or plural form are not intended to limit the presently disclosed systems or methods, their components, acts, or elements. The use herein of "including," "comprising," "having," "containing," "involving," and variations thereof is meant to encompass the items listed thereafter and equivalents thereof as well as additional items.

References to "or" may be construed as inclusive so that any terms described using "or" may indicate any of a single, more than one, and all of the described terms. In addition, in the event of inconsistent usages of terms between this document and documents incorporated herein by reference, the term usage in the incorporated features is supplementary to that of this document; for irreconcilable differences, the term usage in this document controls.

Various controllers, such as the controller 112, may execute various operations discussed above. Using data stored in associated memory and/or storage, the controller 112 also executes one or more instructions stored on one or more non-transitory computer-readable media, which the controller 112 may include and/or be coupled to, that may result in manipulated data. In some examples, the controller 112 may include one or more processors or other types of controllers. In one example, the controller 112 is or includes at least one processor. In another example, the controller 112 performs at least a portion of the operations discussed above using an application-specific integrated circuit tailored to perform particular operations in addition to, or in lieu of, a general-purpose processor. As illustrated by these examples, examples in accordance with the present disclosure may perform the operations described herein using many specific combinations of hardware and software and the disclosure is not limited to any particular combination of hardware and software components. Examples of the disclosure may include a computer-program product configured to execute methods, processes, and/or operations discussed above. The computer-program product may be, or include, one or more controllers and/or processors configured to execute instructions to perform methods, processes, and/or operations discussed above.

Having thus described several aspects of at least one embodiment, it is to be appreciated various alterations, modifications, and improvements will readily occur to those skilled in the art. Such alterations, modifications, and improvements are intended to be part of, and within the spirit and scope of, this disclosure. Accordingly, the foregoing description and drawings are by way of example only.

## Claims

1. A power system, comprising:
an input configured to receive power from a power source;
an output configured to provide power to a load;
a first bus coupled between the input and the output;
a second bus coupled between the input and the output;
a neutral node;
a first set of one or more switching devices coupled to the first bus and configured to control routing of current;
a second set of one or more switching devices coupled to the second bus and configured to control the routing of current; and
a plurality of switching devices coupled between the neutral node and at least one of the first bus or the second bus, the plurality of switching devices including at least a first switching device and a second switching device, the first switching device configured to be coupled in series with the second switching device between the neutral node and at least one of the first bus or the second bus.

2. The power system of claim 1 wherein the first set of one or more switching devices includes a third switching device and a fourth switching device,
the third switching device including a third switch coupled to the input and a third diode coupled to the input, the third switch being coupled in parallel with the third diode, and an anode of the third diode being coupled to the input, and
the fourth switching device including a fourth switch coupled to the output and a fourth diode coupled to the output, the fourth switch being coupled in parallel with the fourth diode, and an anode of the fourth diode being coupled to the output.

3. The power system of claim 1 wherein the second set of one or more switching devices include a third switching device and a fourth switching device,
the third switching device including a third switch coupled to the input and a third diode coupled to the input, the third switch being coupled in parallel with the third diode, a cathode of the third diode being coupled to the input,
the fourth switching device including a fourth switch coupled to the output and a fourth diode coupled to the output, the fourth switch being coupled in parallel with the fourth diode, a cathode of the fourth diode being coupled to the output.

4. The power system of claim 1 wherein the first switching device and second switching device are coupled between the neutral node and the first bus, and
the plurality of switching devices include a third switching device and a fourth switching device, the third switching device and fourth switching device configured to be coupled in series between the neutral node and the second bus, wherein, in particular, the first switching device includes a first switch and a first diode, and the second switching device includes a second switch and a second diode, the first switching device coupled between the first bus and the second switching device, and the second switching device coupled between the first switching device and the neutral node.

5. The power system of claim 1 further comprising a third switching device coupled between the first bus and a DC bus, the third switching device including a third switch and a third diode, wherein, in particular, the third switching device is coupled to at least one of the first switching device or the second switching device.

6. The power system of claim 1 further comprising a third switching device coupled between the second bus and a DC bus, the third switching device including a third switch and a third diode, wherein, in particular, the third switching device is coupled to at least one of the first switching device or the second switching device.

7. The power system of any one of the preceding claims further comprising at least one controller, the at least one controller configured to control at least one of the first switching device or the second switching device to be in an open state during a positive cycle of input power or output power or the at least one controller configured to control at least one of the first switching device or the second switching device to be in an open state during a negative cycle of input power or output power.

8. The power system of any one of the preceding claims wherein at least one of the first switching device or the second switching device is rated for a higher voltage than at least one other switch of the plurality of switching devices.

9. A non-transitory computer-readable medium containing thereon instructions for instructing at least one processor to control a power system, the instructions instructing the at least one processor to:
control a first set of one or more switching devices coupled to a first bus to be in a closed state during a positive cycle and a negative cycle of input power or output power;
control a second set of one or more switching devices coupled to a second bus to be in a closed state during the positive cycle and the negative cycle;
control a first switching device of a plurality of switching devices to be in an open state during the positive cycle, the plurality of switching devices coupled between the first bus and the second bus; and
control a second switching device of the plurality of switching devices to be in an open state during the negative cycle.

10. The non-transitory computer-readable medium of 9 wherein the instructions further instruct the at least one processor to:
monitor a current at an output; and
responsive to detecting the current changing control at least one switching device of the plurality of switching devices to be in a closed state during either a positive cycle or a negative cycle.

11. The non-transitory computer-readable medium of claim 9 or 10 wherein controlling at least one switching device to be in a closed state causes at least one of the first bus and the second bus to be selectively coupled to one or more DC busses, the one or more DC busses configured to provide DC voltages.

12. The non-transitory computer-readable medium of any one of the preceding claims 9 to 11 wherein the instructions further instruct the at least one processor to selectively open and close at least one switching device of the plurality of switching devices according to a duty cycle.

13. A method for controlling a power system, comprising:
controlling a first set of one or more switching devices coupled to a first bus to be in a closed state during a positive cycle and a negative cycle of input power or output power;
controlling a second set of one or more switching devices coupled to a second bus to be in a closed state during the positive cycle and the negative cycle;
controlling a first switching device of a plurality of switching devices to be in an open state during the positive cycle, the plurality of switching devices coupled between the first bus and the second bus; and
controlling a second switching device of the plurality of switching devices to be in an open state during the negative cycle.

14. The method of claim 13 further comprising:
monitoring a voltage at an output;
responsive to detecting the voltage changing by a threshold amount, controlling at least one switching device of the plurality of switching devices to be in a closed state during either a positive cycle or a negative cycle wherein, in particular, controlling at least one switching device to be in a closed state causes at least one of the first bus and the second bus to be selectively coupled to one or more DC busses, the one or more DC busses configured to provide DC voltages.

15. The method of claim 13 or 14 further comprising selectively opening and closing at least one of the plurality of switching devices according to a predetermined duty cycle.
